# EUROPÄISCHE PATENTSCHRIFT

(11) **EP 2 511 328 B1**
(45) Veröffentlichungstag und Bekanntmachung des Hinweises auf die Patenterteilung: **04.07.2018**
(21) Anmeldenummer: 12160508.3
(22) Anmeldetag: 21.03.2012
(51) Int. Cl.: C08J 9/14, C08L 83/00, F25D 23/06, C08G 18/38

(54) **Zusammensetzung, enthaltend spezielle Carbamat-artige Verbindungen, geeignet zur Herstellung von Polyurethanschäumen**
Composition containing special carbamate-like compounds, suitable for producing polyurethane foams
Composition comportant des liaisons contenant du carbamate spéciales adaptée à la fabrication de mousses de polyuréthanes

(30) Priorität: 15.04.2011 DE 102011007468
(43) Veröffentlichungstag der Anmeldung: 17.10.2012
(73) Patentinhaber: Evonik Degussa GmbH, 45128 Essen (DE)
(72) Erfinder: Glos, Martin, 46325 Borken (DE)

(56) Entgegenhaltungen:
- EP-A1- 0 672 697
- EP-A1- 0 767 199
- EP-A1- 1 985 642
- WO-A1-2007/019063
- WO-A2-2004/065450
- WO-A2-2008/070077
- DE-A1- 1 802 503
- JP-A- 7 258 374
- US-A- 3 522 304
- US-A1- 2001 037 022
- GUELCHER S A ET AL: "Synthesis of biocompatible segmented polyurethanes from aliphatic diisocyanates and diurea diol chain extenders", ACTA BIOMATERIALIA, ELSEVIER, AMSTERDAM, NL, Bd. 1, Nr. 4, 1. Juli 2005 (2005-07-01), Seiten 471-484, XP027820211, ISSN: 1742-7061 [gefunden am 2005-07-01]
- Anonymous: "Fettsäuren - Wikipedia", , 10 August 2016 (2016-08-10), XP055297968, Retrieved from the Internet: URL:https://de.wikipedia.org/wiki/Fettsäur en [retrieved on 2016-08-26]

## Beschreibung

Gegenstand der Erfindung, jeweils nach Maßgabe der Ansprüche, sind Zusammensetzungen, geeignet zur Herstellung von Polyurethanschäumen, die zumindest eine Isocyanat-Komponente, eine Polyolkomponente, einen Katalysator, der die Ausbildung einer Urethan- oder Isocyanurat-Bindung katalysiert, optional ein Treibmittel und weitere Additive aufweist, welche dadurch gekennzeichnet, sind, dass sie zusätzlich mindestens eine Verbindung aufweisen, die mindestens ein Strukturelement der Formel (I) 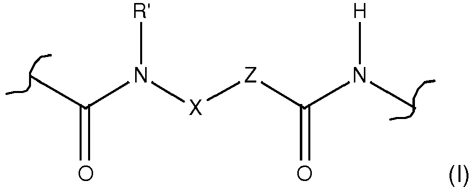 enthält, ein Verfahren zur Herstellung von Polyurethan- bzw. Polyisocyanuratschaumstoffen unter Verwendung dieser Zusammensetzungen sowie die Verwendung der entsprechenden Polyurethan- bzw. Polyisocyanuratschaumstoffen.

Bei der Herstellung von Schäumen auf Basis von Polyolen und Isocyanaten werden zellstabilisierende Additive eingesetzt, welche für eine gleichmäßige und störungsarme Schaumstruktur sorgen und damit die Gebrauchseigenschaften des Schaumstoffes im wesentlichen Maße positiv beeinflussen. Besonders effektiv sind Tenside auf der Basis von organisch modifizierten Siloxanen, welche daher den bevorzugten Typ der Schaumstabilisatoren darstellen.

Diese Siloxane werden bei der Verschäumung oftmals nicht in reiner Form zugegeben, sondern mit weiteren nicht Silizium-haltigen Komponenten abgemischt. Dies kann dazu dienen die Dosierbarkeit zu verbessern, da oftmals nur sehr geringe Mengen an Siloxan zu der zu verschäumenden Mischung zugegeben werden müssen. Außerdem kann die Abmischkomponente auch die Löslichkeit der Siloxane in der Polyolmischung verbessern und damit zusätzlich Einfluss auf die Verschäumung und die Schaumeigenschaften nehmen.

Es kann von Vorteil sein, wenn die Abmischkomponente ebenfalls tensidische Eigenschaften hat, die die Schaumeigenschaften positiv beeinflussen. So werden in jüngerer Zeit immer häufiger Polyurethanschäume verlangt, die keine Siloxan-Schaumstabilisatoren aufweisen.

Aus dem Stand der Technik sind verschiedene Schaumstabilisatoren bzw. Abmischkomponenten bekannt:
EP 0839852 A2 beschreibt die Herstellung von Polyurethanschaum unter Verwendung von Siloxanen in Abmischungen mit pflanzlichen Ölen bestehend aus unterschiedlichen Triglyceriden. Die Öle scheinen aber keinen Einfluss auf die Schaumqualität zu haben.

In den Anmeldungen DE 1802500 und DE 1802503 werden Alkanolamide, die z. B. durch Umsetzung von Diethanolamin mit natürlichen Fettsäuren oder natürlich vorkommenden Glyceriden erhalten werden, und deren Verwendung als Polyolkomponente bei der Herstellung von Polyurethanschäumen beschrieben. In der Beschreibung wird die Möglichkeit erwähnt, dass auf die Verwendung von Siloxan-Tensiden verzichtet werden kann.

Ähnlich werden in den Anmeldungen DE 1745443, DE 1745459 und US 3578612 Alkanolamide von polymeren Fettsäure oder Alkokylate davon beschrieben, die als Polyol-Komponente zur Herstellung von Polyurethanschäumen verwendet werden. Bei der Verschäumung ist immer auch ein Siloxan als Stabilisator vorhanden.

In US 3629308 sind Butanol gestartete Polyether als Abmischkomponente für Organosiloxane beschrieben.

In EP 48984 B1 sind Abmischungen von Siloxanen mit verschiedenen wasserlöslichen Tensiden zur Verwendung in Polyester-Polyurethanschaum beschrieben. Diese Tenside sind oftmals schlecht bioabbaubar.

In EP 43110 A1 sind Abmischungen von Siloxanen mit Lösungsmitteln wie z.B. Alkoxylate an Glycerin, Wasser, TMP, Butanol oder Nonylphenol zur Verwendung in hochelastischem Polyurethanschaum beschrieben.

In US 5236961 wird die Herstellung von Polyurethanschäumen unter Verwendung von Alkylphenol-Ethoxylaten als Schaumstabilisatoren beschrieben, wobei diese aus petrochemischen Quellen stammen.

In der EP 0734404 wird die Herstellung von PU-Schäume unter Verwendung von Polyalkylenoxiden beschreiben, wobei die Polyalkylenoxide aufgebaut werden indem man 10-90% Butylenoxid verwendet.

DE 2244350 beschreibt die Verwendung von Copolymeren, die aus N-Vinylpyrrolidon und Maleinsäureestern hergestellt werden, zur Herstellung von Polyurethanschaum.

Viele der im Stand der Technik beschriebenen Schaumstabilisatoren, insbesondere die Si-basierten, bzw. Abmischkomponenten zeichnen sich durch ungünstige Toxizität, schlechte Bioabbaubarkeit oder Hydrolyseempfindlichkeit aus.

Die nach dem Stand der Technik bekannten nicht Si-haltigen Stabilisatoren sind nur mit relativ hohem technischen Aufwand herstellbar, basieren meist nicht auf nachwachsenden Rohstoffen und haben eine schlechte Bioabbaubarkeit.

Aufgabe der vorliegenden Erfindung war die Herstellung von Schäumen auf Basis von Polyolen und Isocyanaten unter Verwendung von Zusammensetzungen, die einen oder mehrere der aus dem Stand der Technik bekannten Nachteile nicht aufweisen.

Überraschenderweise wurde gefunden, dass Zusammensetzungen gemäß Anspruch 1 diese Aufgabe lösen.

Gegenstand der vorliegenden Erfindung sind deshalb Zusammensetzungen, nach Maßgabe des Anspruchs 1, geeignet zur Herstellung von Polyurethanschäumen, die zumindest eine Isocyanat-Komponente, eine Polyolkomponente, einen Katalysator, der die Ausbildung einer Urethan- oder Isocyanurat-Bindung katalysiert, optional ein Treibmittel und optional weitere Additive aufweisen, welche dadurch gekennzeichnet sind, dass sie zusätzlich eine Verbindung aufweisen, die mindestens ein Strukturelement der Formel (I) 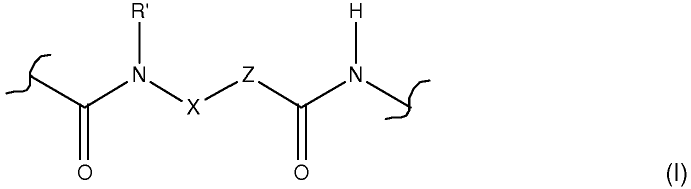 enthält.

Ebenso ist Gegenstand der vorliegenden Erfindung ein Verfahren zur Herstellung von Polyurethanschaumstoffen, durch Umsetzung einer erfindungsgemäßen Zusammensetzung sowie Polyurethanschaumstoffe, enthaltend mindestens eine Verbindung, die mindestens ein Strukturelement der Formel (I) aufweist.

Außerdem sind Gegenstand der vorliegenden Erfindung die Verwendung von erfindungsgemäßen Polyurethanschaumstoffen als oder zur Herstellung von Isoliermaterialien, vorzugsweise Dämmplatten, Kühlschränken, Isolierschäumen, Fahrzeugsitzen, insbesondere Autositzen, Dachhimmeln, Matratzen, Filterschäumen, Verpackungschäumen oder Sprühschäumen, und Kühlapparaturen, die als Isoliermaterial einen erfindungsgemäßen Polyurethanschaumstoff aufweisen.

Die erfindungsgemäß eingesetzten Verbindungen haben den Vorteil, dass durch Ihren Einsatz auf den Einsatz von Si-haltigen Schaumstabilisatoren vollständig oder zumindest teilweise verzichtet werden kann.

Ein weiterer Vorteil der Verwendung der erfindungsgemäß eingesetzten Verbindungen besteht darin, dass durch deren Verwendung eine Reduktion der Emissionen erreicht werden kann.

Die erfindungsgemäß eingesetzten Verbindungen haben außerdem den Vorteil, dass sie zu einer besseren Löslichkeit von Pentan, einem weit verbreiteten Treibmittel, führen, wodurch den entsprechenden Zusammensetzungen mehr Treibmittel zugesetzt werden kann.

Ein weiterer Vorteil der Verwendung der erfindungsgemäß eingesetzten Verbindungen besteht darin, dass diese zum großen Teil auf nachwachsenden Rohstoffen basieren können.

Des Weiteren haben die erfindungsgemäß eingesetzten Verbindungen den Vorteil, dass sie allein oder in Abmischung mit Kohlenstoffatomen aufweisenden Silizium-Verbindungen in vielen verschiedenen Schaumtypen, so z. B. in Hartschäumen, Heissweichschäumen, viskoelastischen Schäumen, Esterschäumen, HR-Schäumen und halbharten Schäumen als Schaumstabilistoren einsetzbar sind.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel.

Unter Polyurethanschaum (PU-Schaum) wird im Rahmen der vorliegenden Erfindung Schaum verstanden, der als Reaktionsprodukt basierend auf Isocyanaten und Polyolen bzw. Verbindungen mit Isocyanat-reaktiven Gruppen erhalten wird. Es können hierbei neben dem Namen gebenden, Polyurethan auch weitere funktionelle Gruppen gebildet werden, wie z.B. Allophanate, Biurete, Harnstoffe oder Isocyanurate. Daher werden unter PU-Schäumen im Sinne der vorliegenden Erfindung sowohl Polyurethanschäume (PUR-Schäume) als auch Polyisocyanurat-Schäume (PIR-Schäume) verstanden.

Die in Anspruch 1 definierte, erfindungsgemäße Zusammensetzung, geeignet zur Herstellung von Polyurethanschäumen, die zumindest eine Polyolkomponente, einen Katalysator, die die Ausbildung einer Urethan- oder Isocyanurat-Bindung katalysiert, optional ein Treibmittel, gegebenenfalls weitere Additive und ggf. eine Isocyanat-Komponente aufweist, zeichnet sich dadurch aus, dass die Zusammensetzung zusätzlich eine Verbindung aufweist, die mindestens ein Strukturelement der Formel (I) enthält, 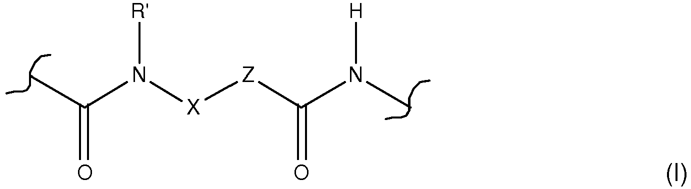 mit R' gleich oder verschieden H oder organischer Rest, insbesondere C₁-C₁₂-Alkyl-, Aryl-, Alkylaryl-Rest-, der ggf. Sauerstoff- oder Stickstoffatome, insbesondere Hydroxy- oder Amino-Gruppen aufweisen kann, oder ein Rest der Formel (II) 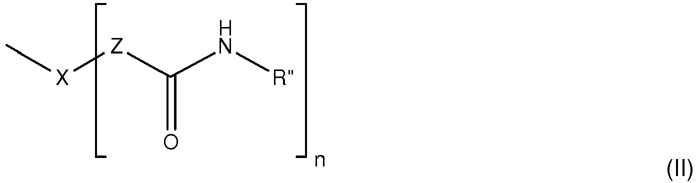
n = 1 bis 5 (je nach Funktionalität von X), vorzugsweise 1,
X gleich oder verschieden ein organischer Rest mit mindestens zwei Kohlenstoffatomen, bevorzugt eine ggf. substituierte Ethylen-, Propylen- oder Isopropylen-Einheit,
Z gleich oder verschieden O oder NR"', mit R'" = H oder Alkyl, vorzugsweise H, und
R" gleich oder verschieden organischer Rest, vorzugsweise Kohlenwasserstoffrest, der z. B. gesättigt oder ungesättigt und/oder verzweigt oder unverzweigt sein kann und der, bei entsprechender Funktionalität, auch mehrere Strukturelemente der Formel 1 verknüpfen kann (der org. Rest R" kann also weitere Verknüpfungsgruppen, die aus Isocyanatgruppen erhalten werden können, aufweisen).

Vorzugsweise enthält die erfindungsgemäße Zusammensetzung als Verbindung, die mindestens ein Strukturelement der Formel (I) enthält, nachfolgend erfindungsgemäße Verbindung genannt, eine Verbindung der Formel (III) 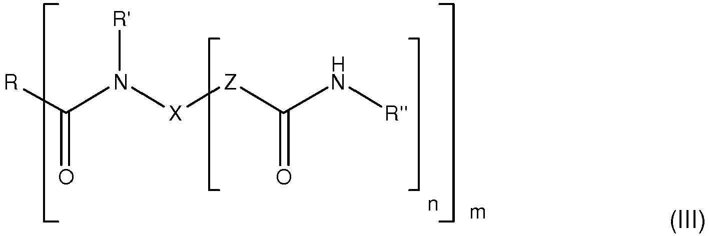 mit n, X, Z, R' und R" wie oben 1 definiert, m = 1 bis 5, vorzugsweise 1, 2 oder 3 und R gleich organischer Rest, vorzugsweise Kohlenwasserstoffrest, aufweist.

Bevorzugt enthält die erfindungsgemäße Zusammensetzung als erfindungsgemäße Verbindung, eine Verbindung der Formel (IV) 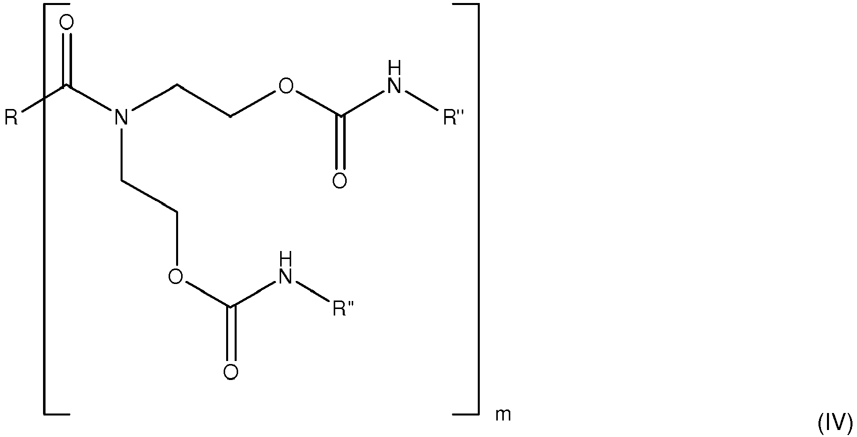 mit m, R und R" wie oben definiert, vorzugsweise m = 1, 2 oder 3 und R = Kohlenwasserstoffrest mit 1 bis 30 Kohlenstoffatomen, vorzugsweise mit 8 bis 20 Kohlenstoffatomen wenn m = 1 und 1 bis 7, vorzugsweise 2 bis 6 Kohlenstoffatomen wenn m = 2 oder 3, bevorzugt 3 ist, oder der Formel (IVa) 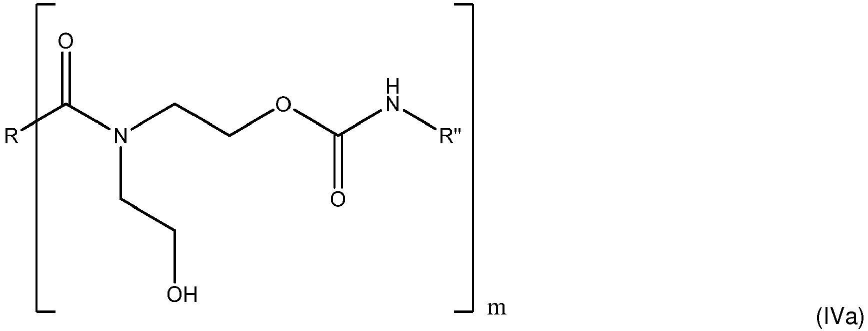 oder, wenn m =1 und R" eine Funktionalität von p aufweist, eine Verbindung der Formel (IVb) 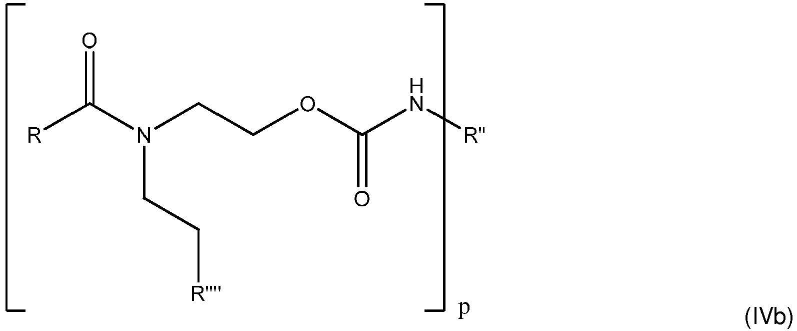 mit R"" = -OH oder -OC(O)-NH-R" und p = 1 bis 10, vorzugsweise 2 bis 6, und bevorzugt eine Verbindung der Formel (IVc) 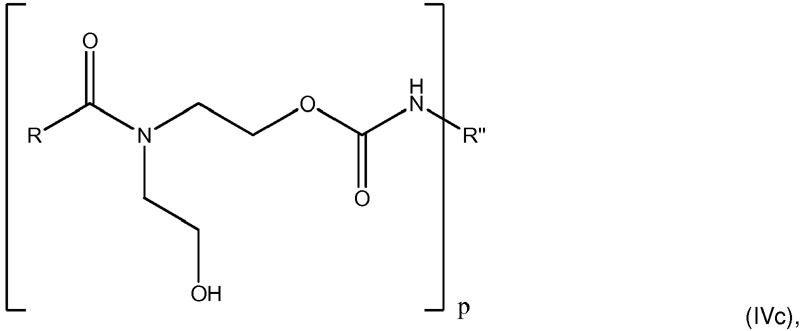 wobei in den Formeln (IV) bis (IVc) m, R und R" wie oben definiert sind.

Die erfindungsgemäße Verbindung der Formel (IVc) ist die besonders bevorzugte Variante auf Basis von Fettsäuren und Isocyanaten mit einer Funktionalität von größer 1.

Eine erfindungsgemäße Verbindung der Formel (IV) kann z. B. unter Verwendung von Diethanolamin hergestellt werden.

Der Anteil der Verbindungen, die mindestens ein Strukturelement der Formel (I) enthalten, (erfindungsgemäße Verbindungen) beträgt bezogen auf 100 Massenteile an Polyolkomponenten von 0,1 bis 10 Massenteile, bevorzugt von 0,5 bis 5 Massenteile, besonders bevorzugt 1 bis 3 Massenteile.

Geeignete erfindungsgemäße Verbindungen werden durch Umsetzung von Fettsäurealkanolamiden oder Fettsäureamidaminen mit Isocyanaten hergestellt.

Die Herstellung kann dabei in einem mehrstufigen Prozess erfolgen durch Umsetzung von Carbonsäuren oder Carbonsäurederivaten, bevorzugt Fettsäuren oder Fettsäureglyceride, mit OH-funktionellen Aminen oder Diaminen und anschließender Umsetzung des OH- oder NH-funktionellen Säureamids mit Isocyanaten.

Die Herstellung der Säureamide kann nach den im Stand der Technik, so z. Z. in DE 1802500; DE 1802503, DE 1745443, DE 1745459 und US 3578612 bekannten Verfahren erfolgen. Es können hier als Rohstoffe z. B. die entsprechenden Carbonsäuren verwendet werden und die Amidbildung unter Wasserabspaltung stattfinden. Ebenso können Carbonsäureester, wie beispielsweise Methylester eingesetzt werden, wobei dann Methanol abgespalten wird. Besonders bevorzugt ist die Verwendung von Glyceriden aus den natürlich vorkommenden Fetten und Ölen, wobei das bei der Amidierung entstehende Glycerin im Reaktionsgemisch verbleiben kann. Ebenso können beispielweise bei der Umsetzung von Triglyceriden mit Aminen noch Di- und Mono-Glyceride im Reaktionsgemisch vorliegen, wenn die Reaktionsbedingungen entsprechend gewählt wurden. Bei Verwendung von Carbonsäureestern werden gegebenenfalls entsprechende Katalysatoren wie z.B. Alkoholate eingesetzt, die eine Amidierung bei relativ milden Bedingungen, im Vergleich zur oben genannten Wasserabspaltung, ermöglichen. Bei der Verwendung von höher-funktionellen Aminen (DETA, AEEA, TRIS) kann es bei der Herstellung der Amide auch zur Bildung von entsprechenden cyclischen Amiden kommen wie Imidazolinen oder Oxazolinen.

Falls bei der Amidierung ein basischer Katalysator verwendet wird kann es vorteilhaft sein mit einer entsprechenden Menge an organischer oder anorganischer Säure anschließend eine Neutralisation durchzuführen. Geeignete Verbindungen sind dem Fachmann bekannt.

Besonders bevorzugt ist die Neutralisation, der durch basische Katalyse hergestellten Amide, mit organischen Anhydriden von Dicarbonsäuren, da diese mit den zur Verfügung stehenden OH- oder NH-Funktionen reagieren können und dadurch angebunden werden, und somit später im fertigen Schaum nicht in Form von freien Carbonsäuren als Emission anfallen können. Außerdem werden z. B. bei der Verwendung von Alkali-Alkoholaten bei der Neutralisation dann entsprechende Ester gebildet, so dass die freien Alkohole nicht aus dem System entweichen können.

Bevorzugte organische Anhydride sind cyclische Anhydride wie zum Beispiel Bernsteinsäureanhydrid, Maleinsäureanhydrid, Alkylbernsteinsäureanhydride, wie Dodecylbersteinsäureanhydrid oder Polyisobutylenbernsteinsäureanhydrid, ebenso geeignet sind Addukte von Maleinsäureanhydrid an entsprechende Polyolefine wie beispielsweise Polybutadiene, Copolymere aus Maleinsäureanhydrid und Olefinen, Stryrol-Maleinsäureanhydrid-Copolymere, Vinylether-Maleinsäureanhydrid-Copolymere, sowie generell Copolymere die Maleinsäureanhydrid als Monomer enthalten, Phthalsäureanhydrid, Benzophenontetracarboxyldianhydrid, Pyromellitsäuredianhydrid, ItaconsäureAnhydrid oder ähnliche Strukturen. Beispiele für kommerziell erhältliche Anhydride dieser Art sind z. B. die Poylvest®-Typen von Evonik Degussa GmbH oder Ricon® MA-Typen von Sartomer.

Die Umsetzung der Amide mit Isocyanaten kann nach den bekannten Verfahren erfolgen. Es können beispielsweise alle Katalysatoren, die auch zur Herstellung von Polyurethanschäumen verwendet werden, hier eingesetzt werden. Die sind z.B. tertiäre Amine oder Metallkatalysatoren auf Basis von Titan, Zinn, Zink, Wismuth oder Zirkon.

Sämtliche Reaktionsschritte können in Substanz oder auch in geeigneten Lösungsmitteln durchgeführt werden. Bei Verwendung von Lösungsmitteln kann der Gehalt an "Aktivsubstanz" im Bereich von 10 bis 99% bevorzugt 20 bis 98%, besonders bevorzugt 30 bis 97% liegen.

### Carbonsäuren:

Als Carbonsäuren können zur Herstellung der erfindungsgemäßen Verbindungen Monocarbonsäuren, Dicarbonsäuren, Tricarbonsäuren, Tetracarbonsäuren auf Basis von aliphatischen oder aromatischen Kohlenwasserstoffen oder deren Derivate eingesetzt werden.

Beispiele für Alkylreste der Monocarbonsäuren sind: Methyl, Ethyl, Propyl, Butyl, Pentyl, Hexyl, Heptyl, Octyl, Nonyl oder Decyl, und dergleichen, bevorzugt sind hier 2-Ethylhexansäure, Nonansäure, Isononansäure.

Beispiele für Alkenylgruppen beinhalten: Ethenyl, Propenyl, Butenyl, Pentenyl, Hexenyl, Heptenyl, Octenyl, Nonenyl, Decenyl, und dergleichen.

Beispiele für aromatische Säuren beinhalten: Aryl und Alkylaryl (Alkylaryl ist festgelegt als eine Aryl-substituierte Alkyl- or Arylalkygruppe), wie beispielsweise: Phenyl, Alkyl-substituiertes Phenyl, Naphthyl, Alkylsubstitutiertes Naphthyl Tolyl, Benzyl, Dimethylphenyl, Trimethylphenyl, Phenylethyl, Phenylpropyl, Phenylbutyl, Propyl-2-phenylethyl, Salicyl und dergleichen.

Aromatische Dicarbonsäuren können z. B. sein: Isophthalsäure, Terephthalsäure oder Phthalsäure. Als aliphatische Dicarbonsäuren können beispielsweise verwendet werden: Bernsteinsäure, Malonsäure, Adipinsäure, Dodecandicarbonsäure, Maleinsäure, Fumarsäure, Itaconsäure, Citraconsäure, Mesaconsäure, Weinsäure, Äpfelsäure, Malonsäure, Glutarsäure, Adipinsäure, Pimelinsäure, Korksäure, Azelainsäure, Sebacinsäure, Zitronensäure.

Als höher funktionelle Säuren können beispielsweise eingesetzt werden: Trimesinsäure, Pyromellitsäure, Benzophenontetracarbonsäure

Bevorzugte Säuren sind geradkettige gesättigte oder ungesättigte Fettsäuren mit bis zu 40 C-Atomen wie z. B. Buttersäure (Butansäure), Capronsäure (Hexansäure), Caprylsäure (Octansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Hexadecensäure), Elaidinsäure ((E)-9-Octadecensäure), cis-Vaccensäure ((Z)-11-Octadecensäure), Linolsäure ((9Z,12Z)-9,12-Octadecadiensäure), alpa-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z,14Z)-5,8,11,14- Eicosatetraensäure), Erucasäure ((Z)-13-Docosensäure), Nervonsäure ((Z)-15-Tetracosensäure), Rizinolsäure, Hydroxystearinsäure und Undecenylsäure, sowie deren Mischungen, wie z.B. Rapsölsäure, Soyafettsäure, Sonnenblumenfettsäure, Erdnussfettsäure und Tallölfettsäure. Weiterhin können Dimer- und Oligomerfettsäuren, wie sie bei der Oligomerisierung ungesättigter Fettsäuren entstehen, verwendet werden.

Quellen für geeignete Fettsäuren oder Fettsäureester besonders Glyceride können pflanzliche oder tierische Fett, Öle oder Wachse sein. Beispielsweise können verwendet werden: Schweineschmalz, Rindertalg, Gänsefett, Entenfett, Hühnerfett, Pferdefett, Walöl, Fischöl, Palmöl, Olivenöl, Avokadoöl, Samenkernöle, Kokosöl, Palmkernöl, Kakaobutter, Baumwollsamenöl, Kürbiskernöl, Maiskeimöl, Sonnenblumenöl, Weizenkeimöl, Traubenkernöl, Sesamöl, Leinsamenöl, Sojabohnenöl, Erdnussöl, Lupinöl, Rapsöl, Senföl, Rizinusöl, Jatropaöl, Walnussöl, Jojobaöl, Lecithin z.B. auf Basis von Soja, Raps, oder Sonneblumen, Knochenöl, Klauenöl, Borretschöl, Lanolin, Emuöl, Hirschtalg, Murmeltieröl, Nerzöl, Borretschöl, Distelöl, Hanföl, Kürbisöl, Nachtkerzenöl, Tallöl, sowie Carnaubawachs, Bienenwachs, Candelillawachs, Ouricuriwachs, Zuckerrohrwachs, Retamowachs, Carandaywachs, Raffiawachs, Espartowachs, Alfalfawachs, Bambuswachs, Hempwachs, Douglastannenwachs, Korkwachs, Sisalwachs, Flachswachs, Baumwollwachs, Dammarwachs, Teewachs, Kaffewachs, Reiswachs, Oleanderwachs, Bienenwachs oder Wollwachs.

### Amine mit zusätzlicher Hydroxy- oder Amin-Funktionalität:

Geeignet sind Amine mit mindestens einer primären oder sekundären Amin-Funktion zur Amidierung und einer Isocyanat-reaktiven Gruppe wie beispielweis Hydroxy- oder Amin-Funktion. Je nach verwendetem Amin muss der Herstellungsprozess, also die Amidierung, so gesteuert werden, dass das Produkt noch mindestens eine isocyanat-reaktive Gruppe enthält.

Geeignete Amine sind zum Beispiel: Ethylendiamin, Diethylentriamin (DETA), Triethylentetramin (TETA), Tetraethylenpentamin (TEPA), Dipropylentriamin, Tripropylentetramin, Tetrapropylenpentamin, Pentapropylenhexamin, Hexapropylenheptamin, sowie höhere Homologen auf Basis Ethylendiamin oder Propylendiamin, 1,2-Propylendiamin, 4,4'-Diaminodicyclohexylmethan, 3,3'-Dimethyl-4,4'-diaminodicyclohexylmethan, 4,4-Methylendiphenylendiamin, Isophorondiamin, Trimethylhexymethylendiamin, Neopentandiamin, Octamethylenediamin, Polyetheramine wie Polyetheramin D 2000 (BASF), Polyetheramin D 230 (BASF), Polyetheramin T 403 (BASF), Polyetheramin T 5000 (BASF) oder auch entsprechende Jeffamin-Typen von Huntsman, Piperazin, Aminoethylpiperazin, Bis(aminoethyl)piperazin, 1,3-Diaminopropan, 3-(Cyclohexylamino)propylamin, 3-(Methylamino)propylamin, N,N-Bis-(3-aminopropyl)methylamin, (3-(2-Aminoethylamino)propylamin), Dipropylen triamin, (N,N'-Bis-(3-aminopropyl)-ethylendiamin.

Geeignete, mindestens eine OH-Funktion aufweisende Hydroxylamine sind zum Beispiel: Ethanolamin, Propanolamin, Alkylethanolamine, Arylethanolamin, Alkylpropanolamin, wie zum Beispiel: Diethanolamin, Monoethanolamin, Diisopropanolamin, Isopropanolamin, Methylisopropanolami, Digylkolamin (2-(2-Aminoethoxy)ethanol), Dimethylethanolamin, N-(2-Hydroxyethyl)anilin, 1-(2-Hydroxyethyl)piperazin, 2-(2-Aminoethoxy)ethanol, 3-Amino-1-propanol, 5-Amino-1-pentanol, Butylethanolamin, Ethylethanolamin, N-Methylethanolamin, Aminopropylmonomethylethanolamin, 2-Amino-2-methylpropanol, Trishydroxymethylaminomethan (THMAM oder TRIS), N-(2-Aminoethyl)ethanolamin (AEEA). Es können auch entsprechende Alkoxylate, insbesondere Ethoxylate und/oder Propoxylate von Aminen verwendet werden, wie z.B. Alkylamine mit einer Hydroxyethyl- oder Hydroxypropyl-Einheit oder beispielsweise N-Hydroxyethyl-Cylohexyldiamin, N-Hydroxethyl-Isophorondiamin, N-Hydroxyethyl-Piperazin, Bis-(hydroxyethyl)toluendiamin.

Zur Herstellung der erfindungsgemäßen Verbindung können aber auch entsprechende kommerziell erhältliche Amide mit OH- oder NH-Funktionen verwendet werden, wie beispielsweise von Evonik Goldschmidt: Rewomid® DC 212 S, Rewomid® DO 280 SE, Rewocid® DU 185 SE, Rewolub® KSM, REWOMID® C 212, REWOMID® IPP 240, REWOMID® SPA, Rewopon® IM AO, Rewopon® IM AN oder Rewopon® IM R 40 sowie DREWPLAST® 154, NINOL® 1301, NINOL® 40-CO, NINOL® 1281, NINOL® COMF, NINOL® M-10 und ethoxylierte Diethanolaminde wie NINOL® C-4 I, NINOL® C-5, NINOL® 1301 von Stepan oder DACAMID® MAL und DACAMID® DC von Sasol.

### Isocyanate:

Geeignet für die Herstellung der erfindungsgemäßen Verbindung sind z. B. aromatische und aliphatische Isocyanate. Diese können mono-, di-, tri-, oder höher-funktionell sein. Es können auch modifizierte Isocyanante verwendet werden wie z.B. Carbodiimide, Uretdione, Urethane, Isocyanurate, Harnstoffe, Biurete, Allophanate, sowie Präpolymere, die durch Vernetzung bzw. teilweise Umsetzung der Isocyanat-Gruppen hergestellt werden können.

Isocyanat-Präpolymere haben eine höhere Molmasse und können ein verbessertes Löslichkeitsverhalten in der Reaktionsmischung als die zugrunde liegenden Isocyanate aufweisen.

### Beispiele für geeignete Isocyanate sind:

Toluenyldiisocyanat (TDI), welches häufig als Isomerengemisch von 2,6-und 2,4-Toluenyldiisocyanat produziert und verwendet wird, Methylendiphenyldiisocyanat (MDI), welches häufig als Isomerengemisch von 4,4-, 2,4- und 2,2-Methylendiphenyldiisocyanat produziert und verwendet wird. Ebenso ist die Verwendung von polymerem MDI, auch Roh-MDI genannt, üblich. Hierbei handelt es sich um Mischungen mit höherer mittlerer Funktionalität, bestehend aus mehrkernigen MDI-Komponenten. 1,5-Naphthylenediisocyanat, p-Phenylenediisocyanat, 3,3'-Dimethylbiphenyl-4,4'-diyldiisocyanat, Tris(isocyanatophenyl)methan, 1,3-Bis(1-isocyanato-1-methylethyl)benzol, Phenylisocyanat, m-,o-, p-Tolylisocyanat, 1-Naphthylisocyanat, 3-Chlorophenylisocyanat, 4-Chlorophenylisocyanat, 3-Chloro-4-tolylisocyanat, 2,4-Dichlorophenylisocyanat, 3,4-Dichlorophenylisocyanat, 3,5-Dichlorophenylisocyanat, p-Isopropylphenylisocyanat, 2,6-Diisopropylphenylisocyanat, α,α,α-Trifluoro-3-tolylisocyanat, p-(Trifluoromethoxy)phenylisocyanat oder p-Toluenesulfonylisocyanat.

### Beispiele für geeignete aliphatische Isocyanate sind:

Hexamethylendiisocyanat, Isophorondiisocyanat, 1,1-Methylenbis(4-isocyanatocyclohexan), 1,3-Bis(isocyanatomethyl)benzol, Bis(isocyanatomethyl)-bicyclo[2.2.1]heptane, 2-Heptyl-3,4-bis(9-isocyanatononyl)-1-pentyl-cyclohexan, 1,3-Bis(1-isocyanato-1-methylethyl)benzol, 1,6-Diisocyanato-2,2,4-trimethyl-hexan, 1,6-Diisocyanato-2,4,4-trimethyl-hexan, 1,4-Diisocyanatocyclohexan, 1,3-Bis(isocyanatomethyl)cyclohexan, Methylisocyanat, Ethylisocyanat, Isopropylisocyanat, n-Butylisocyanat, Hexadecylisocyanat, octadecylisocyanat (stearylisocyanat) oder Cyclohexylisocyanat.

Ebenso können entsprechende Derivate der genannten Isocyanate verwendet werden wie zum Beispiel Uretdione, Carbodiimide, Isocyanurate oder auch Präpolymere.

Kommerziell erhältliche Isocyanate sind beispielsweise: Desmodur®-Typen von Bayer, Vestanant-Typen von Evonik Degussa oder Suprasec®-Typen von Huntsman wie: Desmodur® 44V20, Desmodur® 44V70L, Desmodur® 44M, Desmodur® VP PU 129, Desmodur® CD-S, Desmodur® T 80, Desmodur® N3300, Vestanat® IPDI, Vestanat® T 1890/100, Vestanat® TMDI, Vestanat® H12MDI, Vestanat® HB 2640/100, Vestanat® HT 2500 L, Suprasec® 2085, Suprasec® 1100, Suprasec® 2020.

Es kann vorteilhaft sein, wenn die erfindungsgemäßen Zusammensetzungen ein oder mehrere Kohlenstoffatome aufweisende Siliziumverbindungen, vorzugsweise ausgewählt aus den Polysiloxanen, organomodifizierten Polysiloxanen, Polyethermodifizierten Polysiloxanen und Polyether-Polysiloxan-Copolymeren, enthält.

Als ein oder mehrere Kohlenstoffatome aufweisende Siliziumverbindungen können die im Stand der Technik genannten Substanzen verwendet werden. Vorzugsweise werden solche Si-Verbindungen eingesetzt, die für den jeweiligen Schaumtypen (Hartschäume, Heissweichschäume, viskoelastische Schäume, Esterschäume, HR-Schäume, halbharte Schäume) besonders geeignet sind. Geeignete Siloxane sind beispielsweise in den folgenden Schriften beschrieben: EP 0839852, EP 1544235, DE 10 2004 001 408, EP 0839852, WO 2005/118668, US 20070072951, DE 2533074, EP 1537159 EP 533202, US 3933695, EP 0780414, DE 4239054, DE 4229402, EP 867465. Die Herstellung der Si-Verbindungen kann wie im Stand der Technik beschrieben erfolgen. Geeignete Beispiele sind z. B. in US 4,147,847, EP 0493836 und US 4,855,379 beschrieben.

Besonders bevorzugte Si-Verbindungen haben die Formel (V),

R¹-Si(CH₃)₂O-[-Si(CH₃)₂-O-]ₐ- -Si(CH₃)R²-O-]_{b}-Si(CH₃)₂-R³ (V)

mit
R² gleich oder verschieden = -(CH₂)ₓ-O-(CH₂-CHR⁴-O)_{y}-R⁵ oder ein C₈ bis C₂₂-AlkylRest,
R¹ und R³ gleich oder verschieden = - CH3 oder R², wobei mindestens ein Rest R¹ oder R³ gleich R² ist,
a+b+2 = 10 bis 150, vorzugsweise 25 bis 120,
b = 0 bis 25, vorzugsweise 0,5 bis 15,
x = 3 bis 10, vorzugsweise 3,
y = 1 bis 30,vorzugsweise 5 bis 25,
R⁴ = gleich oder verschieden H, -CH3, -CH2CH3 oder Phenyl-Reste,
R⁵ = gleich oder verschieden H, Alkyl- oder Acyl-Reste, vorzugsweise H, CH3 oder COCH₃.

Es kann vorteilhaft sein, wenn in den Siloxanverbindungen der Formel (V) mindestens 50 mol-% der Reste R⁴ = H, bevorzugt mindestens 90 mol-% der Reste R⁴ = H sind. Es kann außerdem vorteilhaft sein, wenn in den Siloxanverbindungen der Formel (V) bei mindestens 5 mol-% der Reste R⁴ = Methyl, bevorzugt mindestens 10 mol-% der Reste R⁴ = Methyl sind. Vorzugsweise werden solche Siloxanverbindungen der Formel (V) verwendet, bei denen mindestens 50 mol-% der Reste R⁴ = H und bei denen mindestens 10 mol-% der Reste R⁴ = Methyl sind. Bevorzugt sind solche Siloxanverbindungen der Formel (V) vorhanden, bei denen mindestens 90 mol-% der Reste R⁴ = H und mindestens 5 mol-% der Reste R⁴ = Methyl sind.

Besonders bevorzugt sind solche Siloxanverbindungen der Formel (V) bei denen mindestens 5 mol-% der Reste R⁵ = Alkyl- oder Acyl-Reste, vorzugsweise CH3- oder COCH₃-Reste, besonders bevorzugt Methyl-Reste sind.

Es kann vorteilhaft sein, wenn in den Siloxanverbindungen der Formel (IV) die bevorzugten Reste R⁴ und R⁵ in den oben angegeben mol-Prozent-Bereichen vorliegen.

In besonders bevorzugten Siloxanverbindungen der Formel (V) ist der Quotient a/b größer 7, bevorzugt größer 8 besonders bevorzugt größer 10.

Es kann vorteilhaft sein, wenn in den Siloxanverbindungen der Formel (V) mindestens 10 Äquivalenz-% (und höchstens 50 Äquivalenz-%) der Reste R² Alkyl-Gruppen mit 8 bis 22 Kohlenstoffatomen sind (bezogen auf die Gesamtzahl der Reste R² in der Siloxanverbindung).

Vorzugsweise beträgt das Massen-Verhältnis von Siliziumverbindungen zu Verbindungen, die mindestens ein Strukturelement der Formel (I) enthalten, von 0,01 zu 1 bis 1 zu 0,01, bevorzugt von 0,05 zu 1 bis 1 zu 0,05, besonders bevorzugt von 0,1 zu 1 bis 1 zu 0,1 und ganz besonders bevorzugt von 0,2 zu 1 bis 1 zu 0,75.

Die erfindungsgemäßen Zusammensetzungen (zur Schaumherstellung) weisen vorzugsweise von 0,05 bis 10 Massenteile Siliziumverbindungen pro 100 Massenteile Polyolkomponenten auf.

Es kann vorteilhaft sein, wenn die erfindungsgemäßen Verbindungen bereits im Herstellverfahren der in der Zusammensetzung zu verwendenden Si-Verbindungen, meistens ein Hydrosilylierungsverfahren, als Lösemittel verwendet werden. Auf diese Weise wird ein zusätzlicher Abtrennschritt und/oder der Eintrag von ungewünschten Lösemitteln in die erfindungsgemäßen Zusammensetzungen vermieden.

Als Isocyanatkomponente kann die erfindungsgemäße Zusammensetzung alle zur Herstellung von Polyurethan-Schäumen, insbesondere Polyurethan- oder Polyisocyanurat-Hartschaumstoffen, geeigneten Isocyanatverbindungen aufweisen. Vorzugsweise weist die erfindungsgemäße Zusammensetzung ein oder mehrere organische Isocyanate mit zwei oder mehr Isocyanat-Funktionen auf. Geeignete Isocyanate im Sinne dieser Erfindung sind alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4. Beispiele für geeignete Isocyanate sind in EP 1 712 578 A1, EP 1 161 474, WO 058383 A1, US 2007/0072951 A1, EP 1 678 232 A2 und der WO 2005/085310 genannt.

Geeignete Polyole im Sinne dieser Erfindung sind alle organischen Substanzen mit mehreren gegenüber Isocyanaten reaktiven Gruppen sowie deren Zubereitungen. Bevorzugte Polyole sind alle zur Herstellung von Polyurethan-Schäumen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (meist Phthalsäure oder Terephthalsäure) mit mehrwertigen Alkoholen (meist Glycolen). Entsprechend den geforderten Eigenschaften der Schäume werden entsprechende Polyole verwendet, wie beispielsweise beschrieben in: US 2007/0072951 A1, WO 2007/111828 A2, US 2007/0238800, US 6359022 B1 oder WO 96 12759 A2. Ebenso werden bevorzugt verwendbare Pflanzenöl-basierende Polyole in verschiedenen Patentschriften beschrieben, wie beispielsweise in der WO 2006/094227, WO 2004/096882, US 2002/0103091, WO 2006/116456 und EP 1 678 232.

Das Verhältnis von Isocyanat zu Polyol, ausgedrückt als Index, liegt in der erfindungsgemäßen Zusammensetzung vorzugsweise im Bereich von 80 bis 500, bevorzugt 100 bis 350. Der Index beschreibt dabei das Verhältnis von tatsächlich eingesetztem Isocyanat (für eine stöchiometrische Umsetzung mit Polyol) zu berechnetem Isocyanat. Ein Index von 100 steht für ein molares Verhältnis der reaktiven Gruppen von 1 zu 1.

Als Katalysator, der die Ausbildung einer Urethan- oder Isocyanurat-Bindung katalysiert, weist die erfindungsgemäße Zusammensetzung vorzugsweise einen oder mehrere Katalysatoren für die Reaktionen Isocyanat-Polyol und/oder Isocyanat-Wasser und/oder Isocyanat-Trimerisierung geeigneten Katalysator auf. Geeignete Katalysatoren im Sinne dieser Erfindung sind vorzugsweise Katalysatoren, die die Gelreaktion (Isocyanat-Polyol), die Treibreaktion (Isocyanat-Wasser) und/oder die Di- bzw. Trimerisierung des Isocyanats katalysieren. Typische Beispiele für geeignete Katalysatoren sind sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat. Geeignete Katalysatoren sind beispielsweise in EP 1985642, EP 1985644, EP 1977825, US 2008/0234402, EP 0656382 B1, US 2007/0282026 A1 und den darin zitierten Patentschriften genannt.

Bevorzugte in der erfindungsgemäße Zusammensetzung vorhandene Mengen an Katalysatoren richten sich nach dem Typ des Katalysators und liegen üblicherweise im Bereich von 0,05 bis 5 pphp (= Massenteile bezogen auf 100 Massenteile Polyol) bzw. 0,1 bis 10 pphp für Kaliumsalze.

Als optionales Treibmittel kann die erfindungsgemäße Zusammensetzung Wasser oder ein anderes chemisches oder physikalisches Treibmittel aufweisen. Wird Wasser als Treibmittel eingesetzt, so hängen geeignete Wasser-Gehalte im Sinne dieser Erfindung davon ab, ob zusätzlich zum Wasser noch ein oder mehrere Treibmittel eingesetzt werden oder nicht. Bei rein Wasser getriebenen Schäumen liegen die Wassergehalte typischerweise bei 1 bis 20 pphp, werden zusätzlich andere Treibmittel eingesetzt, verringert sich die Einsatzmenge auf üblicherweise 0,1 bis 5 pphp. Es ist auch möglich eine vollkommen wasserfreie erfindungsgemäße Zusammensetzung einzusetzen.

Sind in der erfindungsgemäßen Zusammensetzung andere Treibmittel als Wasser vorhanden, können diese physikalische oder chemische Treibmittel sein. Vorzugsweise weist die Zusammensetzung physikalische Treibmittel auf. Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 bis 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Hydrofluoroolefine, Sauerstoff-haltige Verbindungen wie Methylformiat und Dimethoxymethan, oder Chlorkohlenwasserstoffe, bevorzugt 1,2-Dichlorethan.

Neben oder an Stelle von Wasser und gegebenenfalls physikalischen Treibmitteln können auch chemische Treibmittel eingesetzt werden, die mit Isocyanaten unter Gasentwicklung reagieren, wie beispielsweise Ameisensäure.

Als Additive können die erfindungsgemäßen Zusammensetzungen weitere bei der Herstellung von Polyurethanschäumen einsetzbare Additive aufweisen. Häufig eingesetzte Additive sind z. B. Flammschutzmittel.

Als Flammschutzmittel kann die erfindungsgemäße Zusammensetzung alle bekannten und zur Herstellung von Polyurethan-Schäumen geeigneten Flammschutzmittel aufweisen. Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit und Melamin, geeignet.

Als weitere Additive können in der Zusammensetzung optional auch nach dem Stand der Technik bekannte weitere Komponenten enthalten sein, wie z. B. Polyether, Nonylphenolethoxylate, nichtionische Teniside.

Die erfindungsgemäßen Zusammensetzungen können zur Herstellung von PU-Schäumen eingesetzt werden.

Das erfindungsgemäße Verfahren zur Herstellung von Polyurethanschaumstoffen, zeichnet sich dadurch aus, dass erfindungsgemäße Zusammensetzungen umgesetzt werden.

Entsprechend den Bedürfnissen des zu stabilisierenden Schaumes wird eine erfindungsgemäße Zusammensetzung verwendet, die als Schaumstabilisator entweder die erfindungsgemäße Verbindung allein aufweist oder eine Kombination von erfindungsgemäßer Verbindung mit ein oder mehrere Kohlenstoffatome aufweisender Si-Verbindung.

Das erfindungsgemäße Verfahren zur Herstellung von PU-Schäumen kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine zusammenfassende Darstellung des Stands der Technik, der verwendbaren Rohstoffe und anwendbaren Verfahren findet sich in G. Oertel (Hrsg.): "Kunststoffhandbuch", Band VII, C. Hanser Verlag, München, 1983, in Houben-Weyl: "Methoden der organischen Chemie", Band E20, Thieme Verlag, Stuttgart 1987,(3), Seite 1561 bis 1757, und in "Ullmann's Encyclopedia of Industrial Chemistry" Vol. A21, VCH, Weinheim, 4. Auflage 1992, S. 665 bis 715.

Eine bevorzugte Polyurethan- bzw. Polyisocyanurat-Hartschaumformulierung im Sinne dieser Erfindung würde ein Raumgewicht von 20 bis 150 kg/m³ ergeben und hätte die in Tabelle 1 genannte Zusammensetzung.

**Tabelle 1: Zusammensetzung einer Polyurethan- bzw. Polyisocyanurat-Hartschaumformulierung**

| Komponente | Gewichtsanteil |
|---|---|
| Polyol | 100 |
| Amin-Katalysator | 0,05 bis 5 |
| Kalium-Trimerisierungskatalysator | 0 bis 10 |
| Polyethersiloxan | 0 bis 5 |
| Wasser | 0,1 bis 20 |
| Treibmittel | 0 bis 40 |
| Flammschutzmittel | 0 bis 50 |
| Erfindungsgemäße Verbindung (der Struktur I) | 0,1 bis 5 |
| | |
| Isocyanat-Index: 80 bis 500 | |

Die erfindungsgemäßen Polyurethanschäume (Polyurethan- oder Polyisocyanuratschaumstoffe) zeichnen sich dadurch aus, dass sie mindestens eine (erfindungsgemäße) Verbindung, die mindestens ein Strukturelement der Formel (I), wie oben definiert, aufweisen und vorzugsweise durch das erfindungsgemäße Verfahren erhältlich sind. Vorzugsweise enthalten die erfindungsgemäßen Polyurethan- oder Polyisocyanurat-Hartschaumstoffe 0,1 bis 10 Massen-%, bevorzugt 0,5 bis 5 Massen-% und besonders bevorzugt von 1 bis 3 Massen-% an Verbindungen, die ein mindestens ein Strukturelement der Formel (I) aufweisen in gebundener und/oder ungebundener Form.

Die erfindungsgemäßen PU-Schäume (Polyurethan- oder Polyisocyanuratschaumstoffe) können als oder zur Herstellung von Isoliermaterialien, vorzugsweise Dämmplatten, Kühlschränken, Isolierschäumen, Fahrzeugsitzen, insbesondere Autositzen, Dachhimmeln, Matratzen, Filterschäumen, Verpackungschäumen oder Sprühschäumen verwendet werden.

Erfindungsgemäße Kühlapparaturen, weisen als Isoliermaterial einen erfindungsgemäßen PU-Schaum (Polyurethan- oder Polyisocyanuratschaumstoff) auf.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1:Herstellung der Carbamate:

### Beispiel 1a: Carbamat 1

Unter Stickstoff wurden 245 g Sojaöl und 26,4 g Diethanolamin mit 0,3 g Na-Methylat versetzt und für 5 h bei 90°C gerührt. Anschließend wurden 6,3 g Polyvest® OC 800 S (Additionsprodukt aus Polybutadien und Maleinsäureanhydrid erhältich bei Evonik Degussa) zugegeben und bei 80°C 1 h gerührt. Danach wurde ein Reaktionsprodukt mit einem NCO-Gehalt von 13,7%, hergestellt aus 8,5 g MDI (Desmodur® 44V20 erhältlich von Bayer)und 3,8 g Butyldiglykol unter Verwendung von 0,03 g Kosmos® 54 (ein Katalysator auf Basis von Zinkricinoleat, erhältlich bei Evonik Goldschmidt) als Katalysator, zugegeben und wiederum bei 80°C 1 h gerührt. Man erhielt ein klares gelbliches Produkt.

### Beispiel 1b: Carbamat 2

Unter Stickstoff wurden 246,8 g Sojaöl und 36,7 g Diethanolamin mit 0,3 g Na-Methylat versetzt und für 5 h bei 90°C gerührt. Anschließend wurden 6,4 g Polyvest® OC 800 S (Additionsprodukt aus Polybutadien und Maleinsäureanhydrid erhältich bei Evonik Degussa) zugegeben und bei 80°C 1 h gerührt. Danach wurde mit 9,7 g Vestanat® T 1890/100 (Trimeres IPDI erhältlich bei Evonik Degussa) versetzt und wiederum bei 80°C 1 h gerührt. Man erhielt ein klares gelbliches Produkt.

### Beispiel 1c: Carbamat 3

Unter Stickstoff wurden 88,5 g Sojaöl und 10,5 g Diethanolamin mit 0,1 g Na-Methylat versetzt und für 5 h bei 90°C gerührt. Anschließend wurden 2,25 g Polyvest® OC 800 S (Additionsprodukt aus Polybutadien und Maleinsäureanhydrid erhältlich bei Evonik Degussa) zugegeben und bei 80°C 1 h gerührt. Danach wurde mit 2,97 g Vestanat® T 1890/100 (Trimeres IPDI erhältlich bei Evonik Degussa) versetzt und wiederum bei 80°C 1 h gerührt. Man erhielt ein klares gelbliches Produkt.

### Beispiel 1d: Carbamat 4

Unter Stickstoff wurden 256,7 g Sojaöl und 38,2 g Diethanolamin mit 0,3 g Na-Methylat versetzt und für 5 h bei 90°C gerührt. Anschließend wurden 1,6 g Rizinolsäure zugegeben und bei 80°C 1 h gerührt. Danach wurde mit 3,2 g TDI (Isomerengemische von Toluenyldiisocyanat erhältlich als Desmodur® T 80 von Bayer) versetzt und wiederum bei 80°C 1 h gerührt. Man erhielt ein klares gelbliches Produkt.

### Beispiel 1e: Carbamat 5

Unter Stickstoff wurden 256 g Sojaöl und 38,1 g Diethanolamin mit 0,3 g Na-Methylat versetzt und für 5 h bei 90°C gerührt. Anschließend wurden 1,6 g Rizinolsäure zugegeben und bei 80°C 1 h gerührt. Danach wurde mit 4,0 g Vestanat® IPDI (Isophorondiisocyanat erhältlich bei Evonik Degussa) versetzt und wiederum bei 80°C 1 h gerührt. Man erhielt ein klares gelbliches Produkt.

### Beispiel 1f: Carbamat 6

Unter Stickstoff wurden 251,9 g Sojaöl und 37,4 g Diethanolamin mit 0,3 g Na-Methylat versetzt und für 5 h bei 90°C gerührt. Anschließend wurden 1,6 g Rizinolsäure zugegeben und bei 80°C 1 h gerührt. Danach wurde mit 8,7 g Vestanat® T 1890/100 (Trimeres IPDI erhältlich bei Evonik Degussa) versetzt und wiederum bei 80°C 1 h gerührt. Man erhielt ein klares gelbliches Produkt.

### Beispiel 1g: Carbamat 7

Unter Stickstoff wurden 255 g Sojaöl und 37,9 g Diethanolamin mit 0,3 g Na-Methylat versetzt und für 5 h bei 90°C gerührt. Anschließend wurden 1,6 g Rizinolsäure zugegeben und bei 80°C 1 h gerührt. Danach wurde mit 5,2 g Desmodur® VP PU 129 (monomeres MDI mit erhöhtem 2,4-Isomer-Anteil erhältlich bei Bayer) versetzt und wiederum bei 80°C 1 h gerührt. Man erhielt ein klares gelbliches Produkt.

### Beispiel 1h: Carbamat 8

Unter Stickstoff wurden 255 g Sojaöl und 37,9 g Diethanolamin mit 0,4 g Na-Methylat versetzt und für 5 h bei 90°C gerührt. Anschließend wurden 1,6 g Rizinolsäure zugegeben und bei 80°C 1 h gerührt. Danach wurde mit 5,2 g Desmodur® CD-S (Carbodiimid-modifiziertes MDI erhältlich bei Bayer) versetzt und wiederum bei 80°C 1 h gerührt. Man erhielt ein klares gelbliches Produkt.

### Beispiel 1i: Carbamat 9

Unter Stickstoff wurden 254,7 g Sojaöl und 37,9 g Diethanolamin mit 0,3 g Na-Methylat versetzt und für 5 h bei 90°C gerührt. Anschließend wurden 1,6 g Rizinolsäure zugegeben und bei 80°C 1 h gerührt. Danach wurde ein Reaktionsprodukt mit einem NCO-Gehalt von 13,7%, hergestellt aus 3,8 g MDI (Desmodur® 44V20 erhältlich von Bayer)und 1,7 g Butyldiglykol unter Verwendung von 0,01 g Kosmos 54 (erhältlich bei Evonik Goldschmidt) als Katalysator, zugegeben und wiederum bei 80°C 1 h gerührt. Man erhielt ein klares gelbliches Produkt.

### Beispiel 1j: Carbamat 10

Unter Stickstoff wurden 235 g Sojaöl und 42 g Diethanolamin mit 0,6 g Na-Methylat versetzt und für 5 h bei 90°C gerührt. Anschließend wurden 3,8 g Rizinolsäure zugegeben und bei 80°C 1 h gerührt. Danach wurde ein Reaktionsprodukt mit einem NCO-Gehalt von 4,6%, hergestellt aus 4,2 g MDI (Desmodur® 44V20 erhältlich von Bayer) und 14 g eines Allyl-gestarteten Polyalkylenglykols ("Polyether F-6" von Jiangsu Zhongshan Chemicals), zugegeben und wiederum bei 80°C 1 h gerührt. Man erhielt ein klares gelbliches Produkt.

### Beispiel 2: Herstellung von Siloxanverbindungen

### Beispiel 2a: Siloxan 1

Als Siloxan 1 wurde ein Polyethersiloxan, wie in EP 1544235 A1 in Beispiel 14 beschrieben, hergestellt.

### Beispiel 2b: Siloxan 2

Als Siloxan 2 wurde ein Polydimethylsiloxan verwendet, dessen Herstellung in DE 2533074 A1 in Beispiel 4 als Gemisch 1 beschrieben wird.

### Beispiel 2c: Siloxan 3

Als Siloxan 3 wurde ein Polyethersiloxan wie in EP 1544235 A1 beschrieben mit x=70, y=4, und zwei Polyethern mit 37 val% Polyether 1 (a=36 , b=38 und R"= Methyl) und 63 val% Polyether 2 (a=12 , b=0 und R"= Methyl) eingesetzt. Somit handelt es sich beim Siloxan 3 um ein Polyethersiloxan gemäß der nachstehenden Formel: 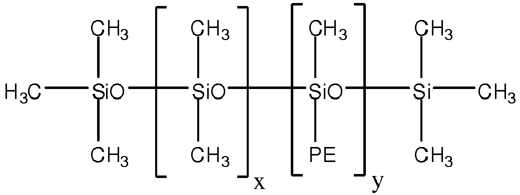 worin, y = 4, x = 70, PE: Polyether bzw. hier eine Mischung aus zwei Polyethern: 37,5 val% eines methylierten Polyethers mit Mn = 3800 g/mol, hergestellt aus 58 Gew.-% Propylenoxid und 42 Gew.-% Ethylenoxid und 62,5 val% eines methylierten Polyethers mit Mn = 600 g/mol, hergestellt aus 100 Gew.-% Ethylenoxid. Die Herstellung solcher Si-C-verknüpften Polyethersiloxane ist beispielsweise in US 4,147,847, EP 0493836 und US 4,855,379 beschrieben.

Hiermit wird der Offenbarungsgehalt der EP-1544325 und der DE-2533074 vollumfänglich Bestandteil dieser Beschreibung.

### Beispiel 3: Herstellung von Abmischungen von erfindungsgemäßen Verbindungen bzw. nicht erfindungsgemäßen Verbindungen mit Si-haltigen Verbindungen

Für Schaum-Typen, bei denen die erfindungsgemäßen Verbindungen alleine keine ausreichend gute Schaumqualität ergaben wurden entsprechende Abmischungen mit Si-haltigen Verbindungen hergestellt. Für Vergleichsversuche wurden auch Abmischungen mit den bisher bekannten Abmischkomponenten hergestellt. Die Herstellung der Abmischungen erfolgte durch einfaches Zusammengeben der Komponenten und anschließendes 5-minütiges Rühren.

Als typische Vertreter von nicht erfindungsgemäßen Verbindungen wurden in den Vergleichsbeispielen die folgenden Substanzen verwendet:
A) Nonylphenol + 8EO: Umsetzungsprodukt von Nonylphenol mit 8 mol Ethylenoxid pro OH-Funktion, kommerziell erhältlich beispielweise als Arkopal® N 080 von Clariant.
B) Rizinusöl, kommerziell erhältlich beispielweise von Fa. Alberding + Boley, Krefeld).
C)PEG 400 Dioleat, kommerziell erhältlich beispielweise als MARLOWET® 4702 von Sasol.
D) Diisononylphthalat, kommerziell erhältlich beispielweise als Jayflex® DINP von Exxon.
E) Ölsäurediethanolamid; Rewomid® DC 212 S (von Evonik Goldschmidt).

Die Zusammensetzungen der Abmischungen sind in Tabelle 2 wiedergegeben.

**Tabelle 2: Abmischungen von Organosiloxanen mit Carbamaten**

| Beispiel | Organosiloxan | Abmischkomponente |
|---|---|---|
| 3a | Siloxan 1, 50 Teile | Carbamat 3, 50 Teile |
| 3b | Siloxan 1, 50 Teile | Carbamat 4, 50 Teile |
| 3c | Siloxan 1, 50 Teile | Carbamat 5, 50 Teile |
| 3d | Siloxan 1, 50 Teile | Carbamat 7, 50 Teile |
| 3e | Siloxan 1, 50 Teile | Carbamat 8, 50 Teile |
| 3f | Siloxan 1, 50 Teile | Carbamat 2, 50 Teile |
| 3g | Siloxan 1, 50 Teile | Carbamat 6, 50 Teile |
| 3h | Siloxan 1, 50 Teile | Carbamat 10, 50 Teile |
| 3V1 | Siloxan 1, 50 Teile | A), 50 Teile |
| 3V2 | Siloxan 1, 50 Teile | B), 50 Teile |
| 3V3 | Siloxan 1, 50 Teile | C), 50 Teile |
| 3V4 | Siloxan 1, 50 Teile | E), 50 Teile |
| 3i | Siloxan 2, 10 Teile | Carbamat 3, 90 Teile |
| 3j | Siloxan 2, 10 Teile | Carbamat 1, 90 Teile |
| 3k | Siloxan 2, 10 Teile | Carbamat 9, 90 Teile |
| 3l | Siloxan 2, 10 Teile | Carbamat 5, 90 Teile |
| 3m | Siloxan 2, 10 Teile | Carbamat 2, 90 Teile |
| 3n | Siloxan 2, 10 Teile | Carbamat 7, 90 Teile |
| 3o | Siloxan 2, 10 Teile | Carbamat 8, 90 Teile |
| 3V5 | Siloxan 2, 10 Teile | D), 90 Teile, |
| 3V6 | Siloxan 2, 10 Teile | E), 90 Teile *) |
| 3p | Siloxan 3, 65 Teile | Carbamat 4, 35 Teile |
| 3q | Siloxan 3, 65 Teile | Carbamat 5, 35 Teile |
| 3r | Siloxan 3, 65 Teile | Carbamat 2, 35 Teile |
| 3s | Siloxan 3, 65 Teile | Carbamat 9, 35 Teile |
| 3t | Siloxan 3, 65 Teile | Carbamat 1, 35 Teile |
| 3u | Siloxan 3, 65 Teile | Carbamat 3, 35 Teile |
| 3V7 | Siloxan 3, 65 Teile | A), 35 Teile |

| | | |
|---|---|---|
| *) Die Mischung war nicht klar, was durch die verbesserten Lösungseigenschaften der Carbamate gegenüber den Diethanolamiden erklärt werden kann. | | |

### Beispiel 4: Anwendungsbeispiele in der Verschäumung

Die anwendungstechnischen Vorteile gegenüber dem Stand der Technik, die der Einsatz der erfindungsgemäßen Verbindungen in Polyurethanschäumen ermöglicht, werden im Folgenden anhand von Anwendungsbeispielen aufgezeigt.

Die Durchführung der Verschäumungen erfolgte im Handmischverfahren. Dazu wurden Polyol, Flammschutzmittel, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Anschließend wurde das Isocyanat (MDI) zugegeben, die Reaktionsmischung mit dem beschriebenen Rührer 5 s bei 3000 Upm verrührt und im Falle der Pour-in-Place-Verschäumung im Becher selbst aufgeschäumt oder in den anderen Verschäumungen sofort in eine thermostatisierte Aluminiumform überführt, welche mit Polyethylenfolie ausgekleidet war. Formtemperatur und Geometrie variierten dabei je nach Schaumformulierung. Die Einsatzmenge an Schaumformulierung war dabei so bemessen, dass sie um 15 % über der zur Mindestbefüllung der Form notwendigen Menge lag.

Einen Tag nach der Verschäumung wurden die Schaumstoffe analysiert. Bei den Becherschäumen wurde das Steigverhalten, also die äußere Gestalt, die Oberfläche des Schaums, sowie anhand einer Schnittfläche im oberen Teil des Schaums der Grad der Innenstörungen und die Porenstruktur visuell beurteilt anhand einer Skala von 1 bis 10, wobei 10 einen ungestörten Schaum und 1 einen extrem stark gestörten Schaum repräsentiert. Bei den Formschäumen wurden Oberfläche und Innenstörungen ebenfalls subjektiv anhand einer Skala von 1 bis 10 beurteilt. Die Porenstruktur (mittlere Zahl der Zellen pro 1 cm) wurde auf einer Schnittfläche optisch durch Vergleich mit Vergleichsschäumen beurteilt. Die Wärmeleitzahl (λ-Wert) wurde an 2,5 cm dicken Scheiben mit einem Gerät vom Typ Hesto Lambda Control bei Temperaturen an Probenunter- und -oberseite von 10°C und 36°C gemessen. Der prozentuale Volumenanteil an geschlossenen Zellen wurde mit einem Gerät vom Typ AccuPyc 1330 der Firma Micromeritics bestimmt. Die Stauchhärten der Schaumstoffe wurden an würfelförmigen Probekörpern mit 5 cm Kantenlänge nach DIN 53421 bis zu einer Stauchung von 10% gemessen (angegeben ist die in diesem Messbereich maximal aufgetretene Druckspannung).

### Beispiel 4a: Hartschaum, Pour in Place - Formulierung nur mit erfindungsgemäßer Verbindung als Schaumstabilisator

Es wurde das in Tabelle 3 genannte PUR-Hartschaumsystem für die Pour in Place Anwendungen verwendet.

**Tabelle 3: Formulierung Pour in Place**

| **Komponente** | **Gewichtsanteil** |
|---|---|
| Voranol RN 490* | 70 Teile |
| Terate 203** | 20 Teile |
| Stepanpol PS 3152*** | 10 Teile |
| Tris(1-chlor-2-propyl)phosphat | 6 Teile |
| N,N-Dimethylethanolamin | 0,35 Teile |
| N,N-Dimethylcyclohexylamin | 1,6 Teile |
| Kosmos 19 | 0,07 |
| Wasser | 0,33 Teile |
| Schaumstabilisator | 1,3 Teile |
| cyclo-Pentan | 21 Teile |
| Desmodur 44V20L**** | 151 Teile |

| | |
|---|---|
| * Polyetherpolyol der Firma Dow ** Polyesterpolyol der Firma Invista *** Polyesterpolyol der Firma Stepan **** polymeres MDI der Firma Bayer; 200 mPa*s; 31,5% NCO; Funktionalität = 2,7 | |

Die Ergebnisse der Pour in Place Anwendungen sind in Tabelle 4 angegeben.

**Tabelle 4: Ergebnisse zu Pour in Place**

| Bsp. | Stabilisator aus Bsp. | Defekte innen (1-10) | Porenstruktur (1-10) | Steigverhalten | Oberfläche |
|---|---|---|---|---|---|
| 4a1* | 3 A) | 4 | 3 | 5 | 3 |
| 4a2* | 3 C) | 4 | 3 | 5 | 3 |
| 4a3* | 3 E) | 5 | 3 | 4 | 5 |
| 4a4 | 1b | 6 | 5 | 5 | 5 |
| 4a5 | 1c | 6 | 6 | 5 | 5 |
| 4a6 | 1j | 8 | 7 | 6 | 7 |

| | | | | | |
|---|---|---|---|---|---|
| * nicht erfindungsgemäße Vergleichsbeispiele; | | | | | |

Die Beispiele 4a4 bis 4a6 zeigen, dass mit den erfindungsgemäßen Zusammensetzungen PU-Schäume hergestellt werden können. Dabei werden bessere Schaumqualitäten erreicht als mit den bekannten Zusammensetzungen, in denen Fettsäureamide eingesetzt werden (Beispiel 4a3).

### Beispiel 4b: PUR-Hartschaumsystem für Isolation von Kühlmöbeln

Es wurde eine für dieses Einsatzgebiet abgestimmte Formulierung verwendet (siehe Tabelle 5), die jeweils mit erfindungsgemäßen Schaumstabilisatoren und nicht erfindungsgemäßen Schaumstabilisatoren verschäumt wurde. Dabei wurde die Reaktionsmischung in eine auf 45 °C thermostatisierte Aluminiumform von 145 cm x 14,5 cm x 3,5 cm Größe eingetragen.

**Tabelle 5: Formulierung Kühlschrank-Isolation**

| Komponente | Gewichtsteile |
|---|---|
| Daltolac R471* | 100 Teile |
| N,N-Dimethylcyclohexylamin | 1,5 Teile |
| Wasser | 2,6 Teile |
| cyclo-Pentan | 13,1 Teile |
| Stabilisator | 1,5 Teile |
| | |
| Desmodur 44V20L** | 198,5 Teile |

| | |
|---|---|
| * Polyetherpolyol der Firma Huntsman ** polymeres MDI der Firma Bayer; 200 mPa*s; 31,5% NCO; Funktionalität 2,7 | |

Die in Tabelle 6 dargestellten Ergebnisse lassen erkennen, dass die erfindungsgemäßen Stabilisatoren durchweg niedrigere Wärmeleitfähigkeiten ermöglichen als die nicht erfindungsgemäßen Vergleichs-Stabilisatoren, die keine erfindungsgemäßen Verbindungen (Carbamate) enthalten. Außerdem erreicht man mit den erfindungsgemäßen Stabilisatoren eine bessere Oberflächenqualität der Schäume.

**Tabelle 6: Ergebnisse zu Kühlschrank-Isolation**

| Bsp. | Stabilisator aus Bsp. | Defekte (1-10) oben/unten /innen | Zellen / cm⁻¹ | λ-Wert / mW/m*K |
|---|---|---|---|---|
| 4b1 | 3V4 | 5/5/5 | 35-39 | 22,6 |
| 4b2 | 3V1 | 5/4/5 | 35-39 | 22,6 |
| 4b3 | 3V2 | 5/4/4 | 35-39 | 22,8 |
| 4b4 | 3V3 | 5/4/5 | 35-39 | 22,7 |
| 4b5 | 3b | 7/3/6 | 40-44 | 22,2 |
| 4b6 | 3c | 7/3/6 | 40-44 | 22,2 |
| 4b7 | 3d | 6/4/6 | 40-44 | 22,4 |
| 4b8 | 3e | 7/4/6 | 40-44 | 22,2 |
| 4b9 | 3f | 7/5/6 | 40-44 | 22,3 |
| 4b10 | 3a | 7/5/6 | 40-44 | 22,0 |
| 4b11 | 3g | 7/4/6 | 40-44 | 22,2 |
| 4b12 | 3h | 7/5/6 | 40-44 | 22,1 |

| | | | | |
|---|---|---|---|---|
| * nicht erfindungsgemäße Vergleichsbeispiele unter Verwendung von Ölsäurediethanolamid und NP8 als Abmischkomponente zum Siloxan | | | | |

### Beispiel 4c: HR-Schaum (hochelastischer Schaum, Kaltschaum)

Als Stabilisatoren wurden entweder Mischungen von Si-Verbindungen und erfindungsgemäßer Verbindung gemäß Tabelle 2 oder erfindungsgemäße Verbindungen allein oder als Vergleichssubstanz Ölsäurediethanolamid (3 E) eingesetzt.

Es wurde folgende Formulierung verwendet: 100 Teile Polyol mit einer von OH-Zahl 35 mg KOH/g und einer Molmasse von 5.000 g/mol, 0,4 Teile oder 1,2 Teile Stabilisator, 3 Teile Wasser, 2 Teile Triethanolamin, 0,6 Teile TEGOAMIN® 33 (von Evonik Goldschmidt GmbH) und 0,2 Teile Diethanolamin und eine Mischung aus 18,5 Teilen polymerem MDI (44V20 von Bayer) und 27,7 Teilen TDI (Desmodur® T 80 von Bayer).

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine quaderförmige Form mit den Abmessungen 40x40x10 cm, die auf eine Temperatur von 40°C erwärmt war und ließ die Masse für 10 Minuten aushärten. Anschließend wurden die Aufdrückkräfte gemessen. Hierbei wurden die Schäume 10 mal auf 50 % ihrer Höhe komprimiert. Hierbei ist der 1. Messwert (AD 1 in Newton) ein Maß für die Offenzelligkeit des Schaums. Anschließend wurde (manuell) vollständig aufgedrückt um beim 11. Messwert (AD 11 in Newton) die Härte des aufgedrückten Schaums bestimmen zu können. Danach wurden die Schäume aufgeschnitten um Haut und Randzone zu beurteilen und die Zellenzahl (ZZ in cm⁻¹) zu bestimmen.

In der nachfolgenden Tabelle 7 sind die jeweiligen Anteile an Stabilisator sowie die Ergebnisse der Prüfung zusammengefasst.

**Tabelle 7: Ergebnisse zu Beispielen 4c (hochelastischer Schaum)**

| Bsp. | AD 1 | AD 11 | ZZ | Haut | Randzone | Anteil an Stabilisator gem. Bsp. |
|---|---|---|---|---|---|---|
| 4c1 | 1118 | 124 | 10 | gut | gut | 0,4 pphp 3i |
| 4c2 | 1070 | 120 | 10 | gut | gut | 0,4 pphp 3j |
| 4c3 | 1077 | 123 | 10 | gut | gut | 0,4 pphp 3k |
| 4c4 | 1126 | 122 | 10 | gut | gut | 0,4 pphp 3l |
| 4c5 | 1039 | 123 | 10 | gut | gut | 0,4 pphp 3m |
| 4c6 | 1081 | 126 | 10 | gut | gut | 0,4 pphp 3n |
| 4c7 | 1007 | 123 | 10 | gut | gut | 0,4 pphp 3o |
| 4c8 | 1061 | 124 | 10 | gut | gut | 0,4 pphp 3V5 |
| 4c9 | 937 | 127 | 10 | gut | befriedigend | 1,2 pphp 1c |
| 4c10 | 858 | 126 | 10 | gut | ausreichend | 1,2 pphp 1h |
| 4c11 | 954 | 131 | 10 | gut | mangelhaft | 1,2 pphp 3E) |

Die Ergebnisse zeigen, dass die erfindungsgemäßen Verbindungen in Verbindung mit Si-Verbindungen bei der HR-Verschäumung zu guten Ergebnissen führen. Da das Ölsäurediethanolamid 3 E) mit dem Siloxan 2 zu keiner klaren Mischung (Beispiel 3V6) führte, wurde damit kein Verschäumungsversuch durchgeführt.

Zusätzlich konnte gezeigt werden, dass die erfindungsgemäßen Verbindungen auch als Si-freie Schaumadditive eingesetzt werden können. Hier wurden gegenüber dem Ölsäurediethanolamid 3 E) bessere Ergebnisse erhalten.

### Beispiel 4d: Verschäumungen im Heissweichschaum:

Es wurden Zusammensetzungen untersucht, die typische Polyurethanheissweichschaumformulierungen darstellen. Die Zusammensetzungen enthielten: 100 Gew.-Teile Polyol (Desmophen® PU20WB01 der Firma Bayer, OH-Zahl 56), 5,0 Gew.-Teile Wasser (chemisches Treibmittel), 1,0 Gew.-Teile Stabilisator wie in Tabelle 2 beschrieben, 0,15 Gew.-Teile Aminkatalysator (Triethylendiamin) 0,23 Gew.-Teile Zinnkatalysator (Zinn-2-ethylhexanoat), 5,0 Gew.-Teile Methylenchlorid (zusätzliches physikalisches Treibmittel) und 63,04 Gew.-Teile Isocyanat (Toluylendiisocyanat, Desmodur® T 80 von Bayer)(Verhältnis von Isocyanatgruppen zu isocyanatverbrauchenden reaktiven Gruppen = 1,15)

Polyol, Wasser, Katalysatoren und Stabilisator wurden in einem Pappbecher vorgelegt und mit einer Rührscheibe durchmischt (45 s mit 1.000 U/min). Anschließend wurde das Methylenchlorid zugegeben und erneut 10 s mit 1.000 U/min vermischt. Anschließend wurde das Isocyanat (T 80) zugegeben und noch einmal mit 2.500 U/min für 7 s gerührt. Das Gemisch wurde dann in eine nach oben hin offene Form der Größe 30 cm x 30 cm x 30 cm gefüllt. Während des Aufschäumens wurde dann die Steighöhe mittels einer Ultraschallhöhenmessung gemessen. Die Steigzeit bezeichnet diejenige Zeit, die verstreicht, bis der Schaum seine maximale Steighöhe erreicht hat. Der Rückfall bezeichnet das Absacken der Schaumoberfläche nach dem Abblasen des Polyurethanheissweichschaumes. Dabei wird der Rückfall 3 min nach dem Abblasen gemessen. Das Raumgewicht wurde gemäß DIN EN ISO 845 und DIN EN ISO 823 gemessen. Die Zellzahl wurde mittels einer Lupe mit Skalierung an drei Stellen ausgezählt und die Werte gemittelt. Es wurde die Stauchhärte nach DIN EN ISO 3386-1 gemessen und der SAG-Faktor errechnet aus dem Quotienten der Stauchhärte bei 65 % Stauchung und 25 % Stauchung des Schaums. Somit ist der SAG-Faktor ein Maß für die Elastizität des Schaums.

Tabelle 8 zeigt die Ergebnisse der Polyurethanheissweichschaumverschäumung. Es sind der verwendete Stabilisator, die Steigzeit (SZ) in Sekunden, die Schaumhöhe (SH) in cm, der Rückfall (RF) in cm, das Raumgewicht (RG) in kg/m³ und die Zellenzahl (ZZ) in Zellen/cm und der SAG-Faktor (SAG-F) angegeben.

**Tabelle 8: Ergebnisse der Polyurethanheissweichschaumverschäumung.**

| Bsp. | Stabilisator | SZ/s | SH/c m | RF/c m | RG/ (kg/m³) | ZZ/ cm⁻¹ | SAG-F |
|---|---|---|---|---|---|---|---|
| 4d1 | 3p | 87 | 35 | 0,5 | 17,0 | 6 | 2,3 |
| 4d2 | 3q | 87 | 35,2 | 0,4 | 16,9 | 6 | 2,2 |
| 4d3 | 3r | 87 | 35,3 | 0,6 | 16,8 | 6 | 2,2 |
| 4d5 | 3s | 87 | 35,5 | 0,8 | 17,0 | 6 | 2,3 |
| 4d6 | 3t | 85 | 32,5 | 0,5 | 17,0 | 6 | 2,1 |
| 4d7 | 3u | 86 | 35,7 | 0,4 | 17,0 | 6 | 2,2 |
| 4d8 | 3V7 | 86 | 35,2 | 0,4 | 17,2 | 6 | 2,4 |

Die Ergebnisse zeigen, dass die erfindungsgemäßen Zusammensetzungen zur Herstellung von Heissweichschaum geeignet sind und zu keinerlei Nachteilen bei den physikalischen Eigenschaften der Schäume führen.

## Patentansprüche

1. Zusammensetzung, geeignet zur Herstellung von Polyurethanschäumen, die zumindest eine Polyolkomponente, wobei geeignete Polyole alle organischen Substanzen mit mehreren gegenüber Isocyanaten reaktiven Gruppen sind, einen Katalysator, der die Ausbildung einer Urethan- oder Isocyanurat-Bindung katalysiert, optional ein Treibmittel, gegebenenfalls weitere Additive und gegebenenfalls eine Isocyanat-Komponente aufweist, **dadurch gekennzeichnet, dass** die Zusammensetzung zusätzlich eine Verbindung aufweist, die mindestens ein Strukturelement der Formel (I) enthält, 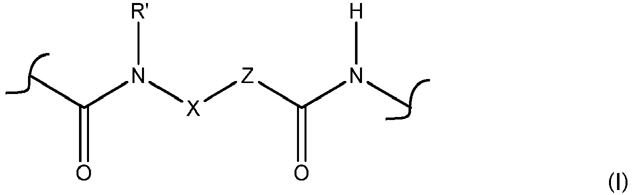
mit R' gleich oder verschieden H oder ein organischer Rest,
X gleich oder verschieden ein organischer Rest mit mindestens zwei Kohlenstoffatomen,
Z gleich oder verschieden O oder NR"', mit R'" = H oder Alkyl,
wobei der Anteil der Verbindungen, die mindestens ein Strukturelement der Formel (I) enthalten, bezogen auf 100 Massenteilen an Polyolkomponenten von 0,1 bis 10 Massenteile beträgt,
und wobei die Verbindungen, die mindestens ein Strukturelement der Formel (I) enthalten, durch Umsetzung von Fettsäurealkanolamiden oder Fettsäureamidaminen mit Isocyanaten hergestellt werden.

2. Zusammensetzung nach Anspruch 1, **dadurch gekennzeichnet, dass** sie als Verbindung, die mindestens ein Strukturelement der Formel (I) enthält, eine Verbindung der Formel (III) 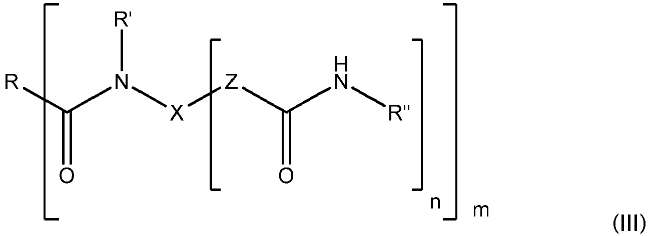 mit X, Z und R' wie in Anspruch 1 definiert und R" gleich oder verschieden organischer Rest, vorzugsweise Kohlenwasserstoffrest, n = 1 bis 5, m = 1 und R gleich organischer Rest, aufweist.

3. Zusammensetzung nach Anspruch 1 oder 2, **dadurch gekennzeichnet, dass** sie als Verbindung, die mindestens ein Strukturelement der Formel (I) enthält, eine Verbindung der Formel (IV) 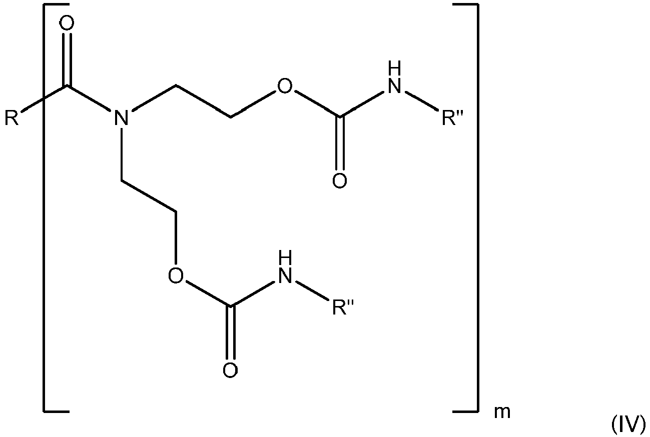 oder der Formel (IVa) 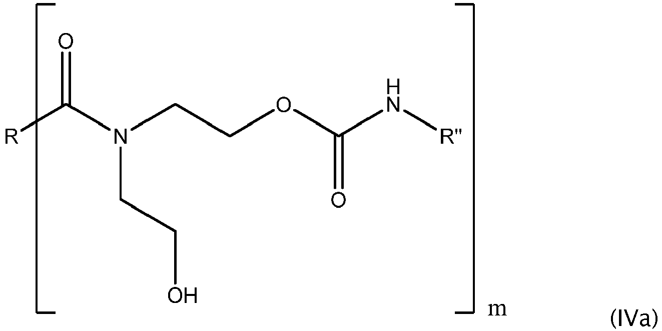 oder der Formel (IVb) 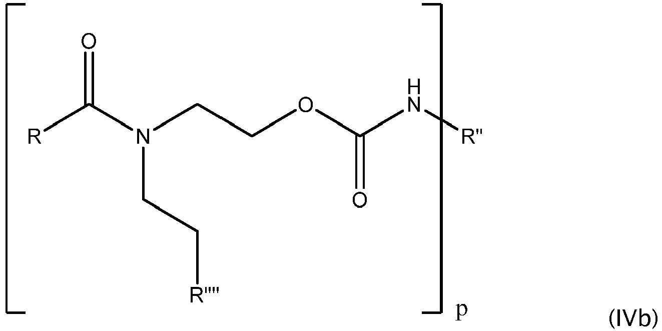 mit m, R und R" wie in Anspruch 2 definiert und R"" = -OH oder -OC(O)-NH-R" und p = 1 bis 10, aufweist.

4. Zusammensetzung nach mindestens einem der Ansprüche 1 bis 3, **dadurch gekennzeichnet, dass** die Zusammensetzung eine oder mehrere Siliziumverbindungen, ausgewählt aus den Polysiloxanen, organomodifizierten Polysiloxanen, Polyethermodifizierten Polysiloxanen und Polyether-Polysiloxan-Copolymeren, enthält.

5. Zusammensetzung nach Anspruch 4, **dadurch gekennzeichnet, dass** das Massen-Verhältnis von Siliziumverbindungen zu Verbindungen, die mindestens ein Strukturelement der Formel (I) enthalten, von 0,01 zu 1 bis 1 zu 0,01 beträgt.

6. Zusammensetzung, nach mindestens einem der Ansprüche 1 bis 5, **dadurch gekennzeichnet, dass** die Zusammensetzung von 0,05 bis 10 Massenteile Siliziumverbindungen pro 100 Massenteile Polyolkomponenten aufweist.

7. Verfahren zur Herstellung von Polyurethan- oder Polyisocyanuratschaumstoffen (Polyurethanschäume), durch Umsetzung einer Zusammensetzung gemäß einem der Ansprüche 1 bis 6.

8. Polyurethanschäume, enthaltend mindestens eine Verbindung, die mindestens ein Strukturelement der Formel (I), wie in Anspruch 1 definiert, aufweist.

9. Polyurethanschäume nach Anspruch 8, erhältlich durch ein Verfahren gemäß Anspruch 7.

10. Verwendung von Polyurethanschäumen gemäß Anspruch 8 oder 9 als oder zur Herstellung von Isoliermaterialien, vorzugsweise Dämmplatten, Kühlschränken, Isolierschäumen, Fahrzeugsitzen, insbesondere Autositzen, Dachhimmeln, Matratzen, Filterschäumen, Verpackungschäumen oder Sprühschäumen.

11. Kühlapparatur, die als Isoliermaterial einen Polyurethanschaum gemäß einem der Ansprüche 8 und 9 aufweist.

## Claims

1. Composition suitable for producing polyurethane foams which includes at least a polyol component, wherein suitable polyols are all organic substances having a plurality of groups reactive towards isocyanates, a catalyst catalyzing the formation of a urethane or isocyanurate bond, optionally a blowing agent, optionally further additives and optionally an isocyanate component, **characterized in that** the composition additionally includes a compound containing at least one structural element of formula (I) 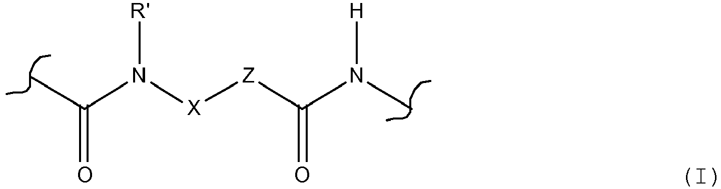
where R' in each occurrence is the same or different and represents H or an organic radical,
X in each occurrence is the same or different and represents an organic radical having at least two carbon atoms,
Z in each occurrence is the same or different and represents 0 or NR'" where R"' is H or alkyl, wherein the proportion of compounds containing at least one structural element of formula (I) is from 0.1 to 10 parts by mass, based on 100 parts by mass of polyol components,
and wherein the compounds containing at least one structural element of formula (I) are prepared by reacting fatty acid akanolamides or fatty acid amideamines with isocyanates.

2. Composition according to Claim 1, **characterized in that** it includes by way of compound containing at least one structural element of formula (I) a compound of formula (III) 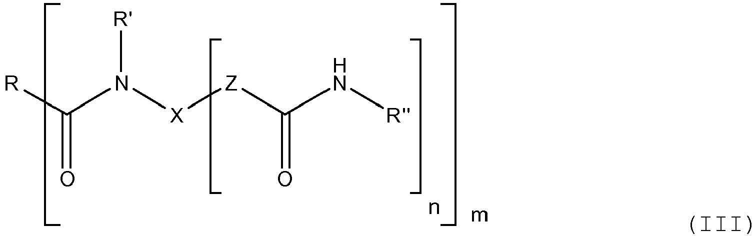 where X, Z and R' are each as defined in Claim 1 and R'' in each occurrence is the same or different and represents an organic radical, preferably a hydrocarbon radical, n = 1 to 5, m = 1 to 5 and R is an organic radical.

3. Composition according to Claim 1 or 2, **characterized in that** it includes by way of compound containing at least one structural element of formula (I) a compound of formula (IV) 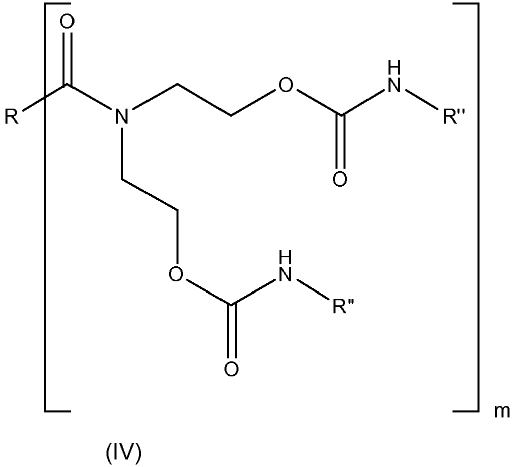 or of formula (IVa) 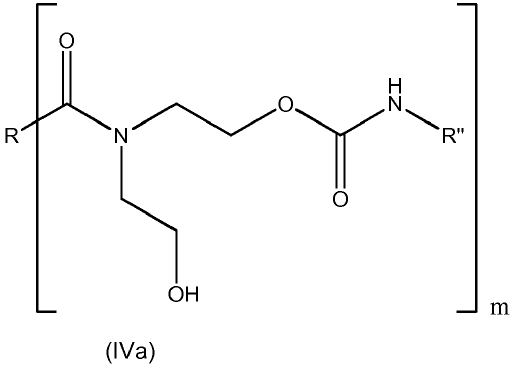 or of formula (IVb) 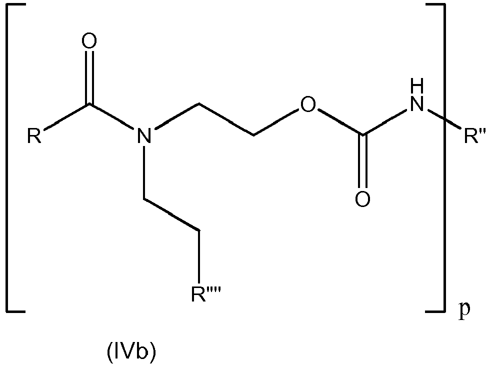 where m, R and R" are each as defined in Claim 2 and R"" is -OH or -OC(O)-NH-R" and p = 1 to 10.

4. Composition according to at least one of Claims 1 to 3, **characterized in that** the composition contains one or more silicon compounds selected from the polysiloxanes, organomodified polysiloxanes, polyether-modified polysiloxanes and polyether-polysiloxane copolymers.

5. Composition according to Claim 4, **characterized in that** the mass ratio of silicon compounds to compounds containing at least one structural element of formula (I) is in the range from 0.01:1 to 1:0.01.

6. Composition according to at least one of Claims 1 to 5, **characterized in that** the composition includes from 0.05 to 10 parts by mass of silicon compounds per 100 parts by mass of polyol components.

7. Process for producing foamed polyurethane or polyisocyanurate materials (polyurethane foams) by reacting a composition according to any one of Claims 1 to 6.

8. Polyurethane foams containing at least one compound which includes at least one structural element of formula (I) as defined in Claim 1.

9. Polyurethane foams according to Claim 8, obtainable by a process according to Claim 7.

10. Use of polyurethane foams according to Claim 8 or 9 as or for producing insulating materials, preferably insulating plates, refrigerators, insulating foams, vehicle seats, more particularly auto seats, roof liners, mattresses, filtering foams, packaging foams or spray foams.

11. Refrigerating apparatus including a polyurethane foam according to any one of Claims 8 and 9 as insulating material.

## Revendications

1. Composition, appropriée pour la fabrication de mousses de polyuréthane, qui comprend au moins un composant polyol, des polyols appropriés étant toutes les substances organiques comprenant plusieurs groupes réactifs avec les isocyanates, un catalyseur, qui catalyse la formation d'une liaison uréthane ou isocyanurate, éventuellement un agent gonflant, éventuellement d'autres additifs et éventuellement un composant isocyanate, **caractérisé en ce que** la composition comprend en outre un composé qui contient au moins un élément structural de formule (I) 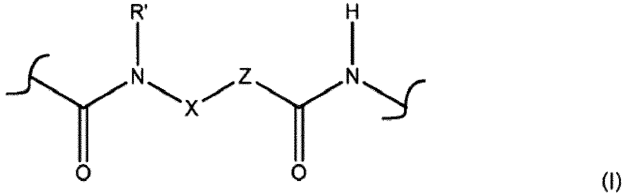
avec R' identique ou différent, H ou un radical organique,
X identique ou différent, un radical organique contenant au moins deux atomes de carbone,
Z identique ou différent, 0 ou NR"', avec R"' = H ou alkyle,
la proportion des composés qui contiennent au moins un élément structural de formule (I), par rapport à 100 parties en masse des composants polyol, étant de 0,1 à 10 parties en masse,
et les composés qui contiennent au moins un élément structural de formule (I) étant fabriqués par mise en réaction d'alcanol-amides d'acides gras ou d'amideamines d'acides gras avec des isocyanates.

2. Composition selon la revendication 1, **caractérisée en ce qu'**elle comprend en tant que composé qui contient au moins un élément structural de formule (I) un composé de formule (III) 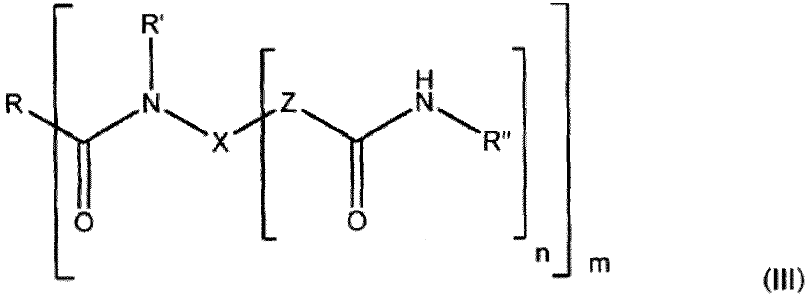 avec X, Z et R' tels que définis dans la revendication 1, et R" un radical organique identique ou différent, de préférence un radical hydrocarboné, n = 1 à 5, m = 1 et R un radical organique.

3. Composition selon la revendication 1 ou 2, **caractérisée en ce qu'**elle comprend en tant que composé contenant au moins un élément structural de formule (I) un composé de formule (IV) 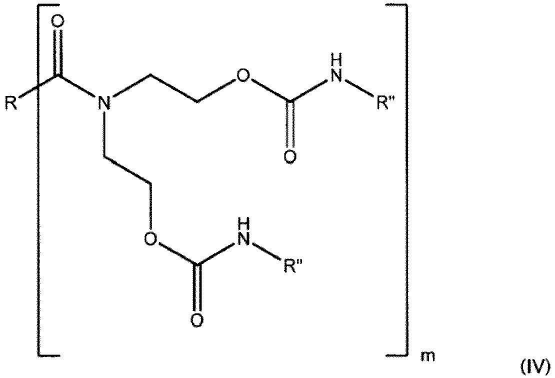 ou de formule (IVa) 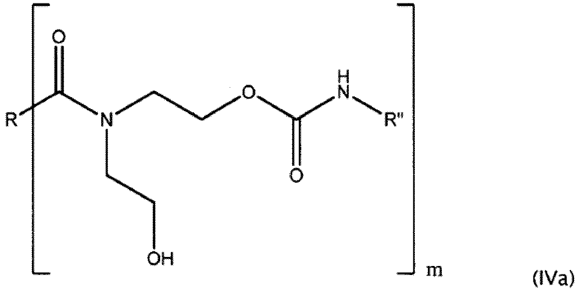 ou de formule (IVb) 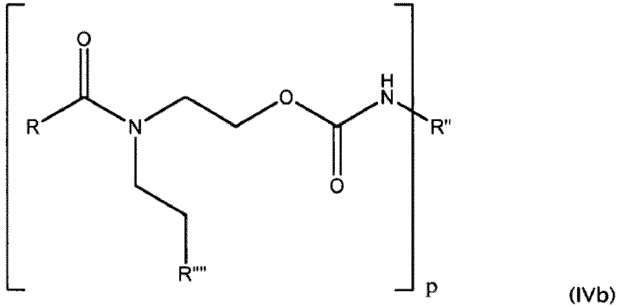 avec m, R et R" tels que définis dans la revendication 2, et R"" = -OH ou -OC(O)-NH-R" et p = 1 à 10.

4. Composition selon au moins l'une quelconque des revendications 1 à 3, **caractérisée en ce que** la composition contient un ou plusieurs composés de silicium, choisis parmi les polysiloxanes, les polysiloxanes à modification organique, les polysiloxanes à modification polyéther et les copolymères de polyéther-polysiloxane.

5. Composition selon la revendication 4, **caractérisée en ce que** le rapport en masse entre les composés de silicium et les composés qui contiennent au moins un élément structural de formule (I) est de 0,01 sur 1 à 1 sur 0,01.

6. Composition selon au moins l'une quelconque des revendications 1 à 5, **caractérisée en ce que** la composition comprend 0,05 à 10 parties en masse de composés de silicium pour 100 parties en masse de composants polyol.

7. Procédé de fabrication de mousses de polyuréthane ou de polyisocyanurate (mousses de polyuréthane) par mise en réaction d'une composition selon l'une quelconque des revendications 1 à 6.

8. Mousses de polyuréthane, contenant au moins un composé qui comprend au moins un élément structural de formule (I), tel que défini dans la revendication 1.

9. Mousses de polyuréthane selon la revendication 8, pouvant être obtenues par un procédé selon la revendication 7.

10. Utilisation de mousses de polyuréthane selon la revendication 8 ou 9 en tant que ou pour la fabrication de matériaux isolants, de préférence de panneaux isolants, de réfrigérateurs, de mousses isolantes, de sièges de véhicules, notamment de sièges automobiles, de toits, de matelas, de mousses filtrantes, de mousses d'emballage ou de mousses pulvérisées.

11. Appareil réfrigérant, qui comprend en tant que matériau isolant une mousse de polyuréthane selon l'une quelconque des revendications 8 et 9.
